# EUROPEAN PATENT SPECIFICATION

(11) **EP 0 422 526 B1**
(45) Date of publication and mention of the grant of the patent: **21.12.1994**
(21) Application number: 90119172.6
(22) Date of filing: 05.10.1990
(51) Int. Cl.: B60N 2/16

(54) **A vehicle seat, particularly for motor cars**
Fahrzeugsitz, insbesondere für Kraftfahrzeuge
Siège de véhicule, en particulier pour véhicules à moteur

(30) Priority: 10.10.1989 IT 6787089
(43) Date of publication of application: 17.04.1991
(73) Proprietor: FIAT AUTO S.p.A., 10135 Torino (IT)
(72) Inventor: Acuto, Giovanni, I-10043 Orbassano, Torino (IT); Vitale, Carlo, I-10042 Nichelino, Torino (IT)
(74) Representative: Bosotti, Luciano

(56) References cited:
- DE-A- 2 947 813
- GB-A- 2 061 716
- US-A- 3 036 806
- US-A- 4 556 185

## Description

The present invention relates to vehicle seats and has been developed with particular attention to its possible use for motor-car seats.

More specifically, the present invention relates to a vehicle seat having the characteristics set forth in the preamble of claim 1 (see for example GB-A-1 208 051).

Another seat of this type is described, for example, in European Patent Application EP-A-0 350 458 in the name of the same Applicant (published on 10/01/90 and therefore forming part of the state of the art under Art. 54 (3) EPC. A somewhat similar arrangement is disclosed also in DE-A-2 947 813 but for controlling the forward tilting movement of a seat.

In the car industry there is an ever-increasing need to provide seats which combine structural simplicity (which is important for simplifying manufacturing processes and limiting costs) with excellent adaptability to the different anthropometric characteristics and driving and travelling habits of motorists.

In particular, it is desired that such seats, in addition to providing for conventional fore-and-aft adjustments and adjustment of the inclination of the backrest, should also offer precise adjustability of the height of the squab and the length of its useful sitting surface. This provision is made to enable the so-called line of sight to be kept approximately constant regardless of a motorist's height, whilst avoiding undesirable phenomena such as incorrect support of the popliteal region (so-called "suspended limb").

Whilst achieving these results it is usually necessary to satisfy other requirements, such as the need to ensure that the front seats of 2- and 3-door cars can tilt well forwards to provide access for passengers to the rear seats or to ensure that any adjustment movement does not cause a passenger's body to move too far from the attachment points for the safety-belts. Moreover, it is important to ensure that the adjusted position reached is retained or can easily be found again after the tilting movement. Finally, it is important to be able to provide adjustment mechanisms which can easily be adapted to different drive systems (manual or motor-driven adjustment)

The object of the present invention is to provide a vehicle seat which responds very well to all the requirements expressed above.

According to the present invention, this object is achieved by virtue of a vehicle seat which has the further characteristics set forth in the characterizing portion of claim 1.

The invention will now be described, purely by way of non-limiting example, with reference to the appended drawings, in which:

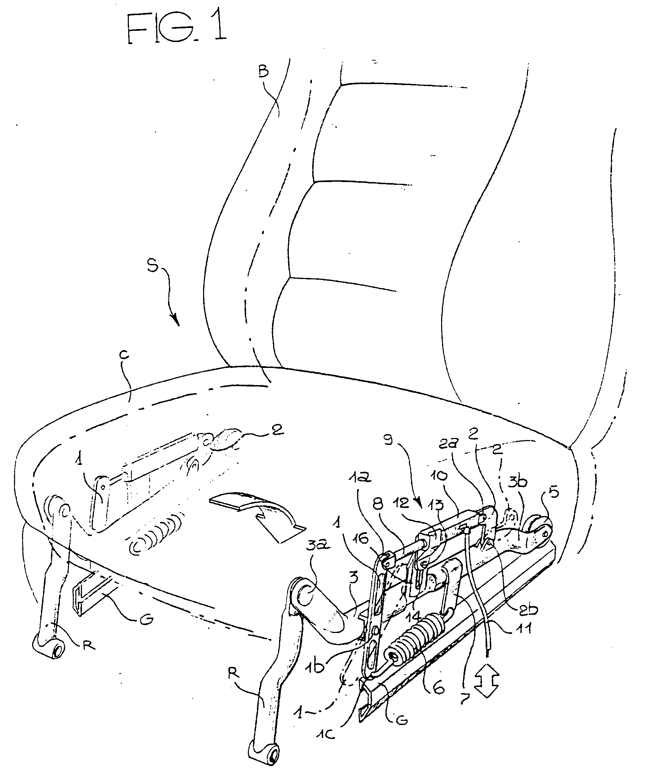

Figure 1 is a perspective view of a vehicle seat produced in accordance with the invention, in which some parts are removed or cut away for simplicity of illustration, and
Figure 2 is a schematic elevational view of some of the parts of the seat illustrated in Figure 1 intended to provide additional explanation of their interaction.

First of all, it should be noted that the terms "front", "rear", "horizontal", etc., as used in the present description and in the claims which follow, refer to the normal conditions of use of the seat (the travelling position) and to the normal direction of travel of the vehicle in which it is mounted.

In the drawings, a vehicle seat is generally indicated S. The embodiment illustrated is one of the two front seats of a motor car which is not shown as a whole.

In general terms, the seat S comprises a seat element C (referred to below as the "squab") and a backrest B which is upstanding from the rear region of the squab C.

The backrest B usually has a headrest (not shown specifically in the drawings) at its upper end and is connected to the squab C by means of an adjustable hinge unit (also not shown) which enables the inclination of the backrest B to the squab C to be varied selectively.

The squab S is mounted on the floor P of the passenger compartment of the vehicle with the interposition of a pair of guides G which extend approximately horizontally along the sides of the seat S beneath the rear region of the squab C and with the front region of the squab supported by a pair of arms R. After engagement means (not shown) which hold the squab C in the normal position of use have been released, the arms R can be pivoted forwardly to tilt the seat S and facilitate access to the rear seats of the vehicle, the rear end of the squab C following a generally circular path guided by a pair of arms (not shown).

The guides G are also formed so as to enable the position of the seat S to be adjusted in a generally forward-rearward direction.

Reference may usefully be made to European Patent EP-B-0 120 817 in the name of the same Applicant for a detailed description of the structure of the guides G and of the mechanisms associated therewith.

Two pivotable arms, indicated 1 and 2, a front and a rear respectively, constitute a pair of arms for supporting the squab at one side of the seat.

A similar pair of support arms, together with associated auxiliary devices which will be described more fully below, is also provided on the opposite side of the seat S in a generally mirror-imaged configuration.

The present description will therefore be given with reference to the pair of arms 1, 2 situated on one side of the seat (more precisely the left-hand side), it being understood that the pair on the opposite side has exactly the same structural configuration.

The arms 1, 2 have respective upper ends 1a, 2a at which they are hinged to the squab C.

A squab support member, indicated 3, is constituted essentially by a bent, shaped tubular element. The member 3 is connected at its front end 3a (possibly with the interposition of a bracket) to the arm R which supports the front end of the squab C on the floor P.

The rear end of the arm 3, indicated 3b, is bent outwardly of the squab C so as to be situated above the rear end of the corresponding guide G.

The rear end 3b of the member 3 carries a roller or wheel 5 which can roll selectively on the guide G in order to achieve the general movement of adjustment described in said European Patent EP-B-0 120 817.

The arms 1 and 2 are hinged to the support element 3 by respective horizontal pins 1b and 2b which are thus situated in positions generally lower than the squab C.

The front arm 1 also has a lower portion 1c which is cantilevered beneath the support member 3 and is connected to one end of a spring 6, whose opposite end is connected to a bracket 7 which projects downwardly from the member 3.

The arm 1 is thus arranged in the general configuration of a rocker arm and is subject to the resilient biassing force of the spring 6; the latter acts in a direction such as to favour the arm to rotate counterclockwise (with reference to the situation shown in the drawing), that is, in the sense which causes the upper end 1a and the front region of the squab C supported thereby to move forwards and upwards.

The function of the spring 6, which may be omitted in seats provided with motor-driven adjustment (in which case so is the end 1c of the arm 1), will be described more fully in the description below.

In the embodiment illustrated, the rear arm 2 is generally L-shaped with the upper portion of the arm bent generally forwards. Although this configuration of the arm 2 is preferred, it should not be considered essential for realising the invention.

In general, the part of the arm 1 between the two points at which it is hinged to the squab C (point 1a) and to element 3 (point 1b) is longer than the distance (measured vertically) between the two hinge points 2a, 2b of the rear arm 2. This, however, is also non-essential for realising the invention.

The rod 8 of a locking device 9, preferably of the type currently known as a "Porter" type device, extends between the upper ends 1a, 2a of the two arms 1, 2. This device (which may be replaced by a functionally equivalent device), is widely known in the art. In addition to the rod 8, it comprises essentially a body 10 which, in this case, is generally prismatic and surrounds the rod 8 and which, in response to the operation (by means not illustrated) of a flexible control cable 11 (a so-called Bowden cable), can be moved selectively from an engaged position, in which the body 10 grips the rod 8 preventing it from sliding within it, to a released position in which the rod 8 can slide freely within the body 10.

The body 10 is mounted on a bracket 12 which embraces it in a generally pincer or jaw-like configuration and is provided at its lower end with a pin 13 which can slide in a slot 14. The slot 14, which extends approximately vertically, is formed in a flange 16 which is cantilevered upwardly from the support member 3.

The bracket 12, and therefore the body 10 of the locking device 9, can thus move a certain distance vertically (with a travel of a few centimetres) but is virtually fixed to the support member 3 as regards horizontal movement.

When the locking device 9 is in its engaged condition, with the rod 8 clamped within it, the arms 1 and 2 are prevented from pivoting (and hence the squab C cannot be adjusted relative to the support member 3).

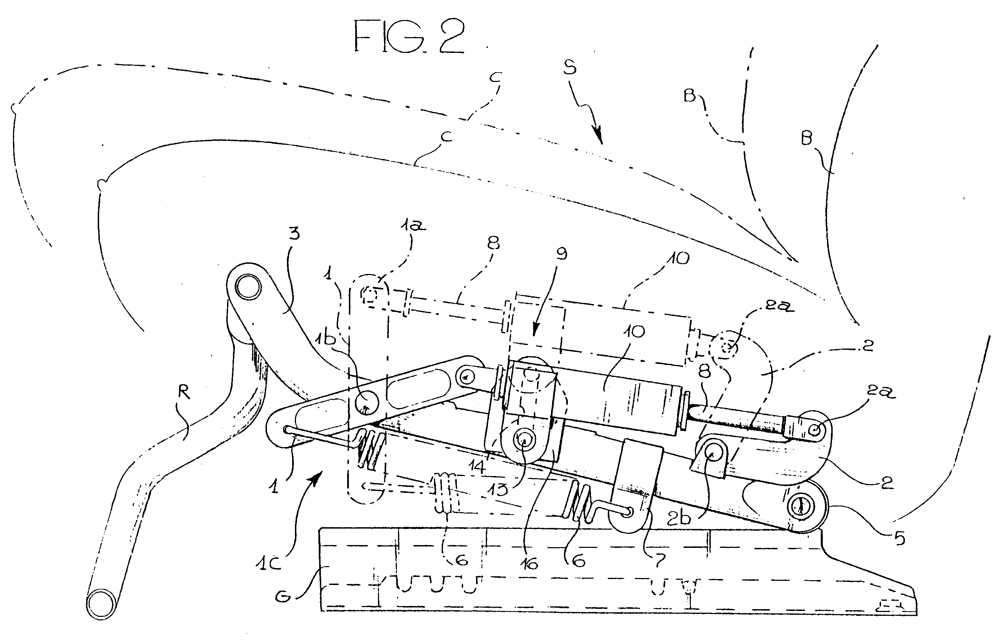

As opposed thereto, when the locking device 9 is brought to its disengaged position, the rod 8 can slide longitudinally within the body 10, thus allowing arms 1 and 2 to oscillate, as is schematically shown in chain lines in figure 2.

When the locking device 9 is disengaged, the motorist can adjust the position of the squab C relative to the support member 3.

In the embodiment shown, this adjustment, which results from the pivoting of the arms 1 and 2, is such as to cause an upward movement when the squab C is moved forwards but a downward movement when the squab C is moved backwards.

Naturally, the use of the invention is not limited to this configuration of use and can also be extended to adjustment systems which operate in accordance with quite different general criteria, but still fall within the scope of the invention as defined by the appended claims. The spring 6 causes the front arm 1 to pivot in the sense (counterclockwise with reference to the situation shown in the drawings) which causes the upper end 1a to move forwards and upwards.

The spring 6 counteracts the force exerted in the opposite sense by the weight of the seat occupant and has the function of preventing the locking device 9 from falling backwards under its own weight and the weight of the seat occupant when it is moved to the released position in order for the squab to be adjusted.

As already stated, the spring 6 may be omitted from those systems in which the adjustment (and in particular the pivoting of the arms 1 and 2) is controlled by servomotors (so-called electrified adjustment).

In any case, once the desired position of adjustment has been reached, the motorist can operate the control cable 11 to return the locking device 9 to its engaged condition so as to prevent any further movement of the arms 1 and 2 by the locking of the rod 8 in the body 10.

The presence of the slot 14 which enables the locking device 9 to move vertically means that the latter can follow the downward and upward movements of the rod 8 caused by the variation in heights of the upper ends 1a, 2a of the arms 1, 2 as a result of their pivoting during the adjustment movement.

## Claims

1. A vehicle seat comprising a squab (C) supported by at least one pair of pivotable support arms (1, 2), a front arm (1) and a rear arm (2) respectively, the position of the squab (C) being adjustable selectively as a result of the pivoting of the arms (1, 2), a support member (3) to which the arms (1, 2) of the pair are hinged in a position below (1b, 2b) the squab, whereby the squab (C) can be moved to a particular, selected position of adjustment by the pivoting of the arms (1, 2),
characterised in that the at least one pair of arms (1, 2) is further associated with:
- a locking device (9), comprising a rod (8) with two opposite ends hinged respectively to one arm (1) of the pair and to the other arm (2) close to the squab (C), and a body (10) which can cooperate with the rod (8) in an engaged condition and in a released condition in which relative movement of the rod (8) and the body (10) is prevented and permitted respectively; the body (10) being mounted on the support member (3) so that it is essentially prevented from moving in a forward-rearward direction, the arrangement being such that when the locking device (9) is in its released condition, said pivoting of the arms (1, 2) is allowed and the position of adjustment reached through said pivoting of the arms (1, 2) can be retained by the return of the locking device (9) to the enganged condition.

2. A vehicle seat according to Claim 1, characterised in that it includes a pair of pivotable support arms (1, 2), a said support member (3) and a locking device (9) on each side of the seat.

3. A vehicle seat according to Claim 1 or Claim 2, characterised in that the support member (3) is constituted by a shaped tubular body.

4. A seat according to Claim 1 or Claim 3, characterised in that, at its rear end, the support member (3) carries a roller (5) for the rolling support of the squab (C).

5. A seat according to any one of the preceding claims, characterised in that substantially vertical guide means (14) are associated with the support member (3) and cooperate with the body (10) of the locking device (9) so as to enable the locking device (9) to move a certain distance in a substantially vertical direction relative to the support member (3).

6. A seat according to any one of the preceding claims, characterised in that it includes resilient means (6) which act on at least one (1) of the arms of the pair (1, 2) so as to cause the arms (1, 2) to pivot in the sense which corresponds to the raising of the squab (C).

7. A seat according to Claim 1 or Claim 6, characterised in that at least one (1) of the arms of the pair (1, 2) has a lower portion which is cantilevered beneath the support member (3) and in that resilient biassing means (6) act between the support member (3, 7) and the lower projecting portion of the at least one arm (1).

8. A seat according to any one of the preceding claims, characterised in that the rear arm (2) of the pair (1, 2) is generally L-shaped with an upper end (2a), intended to be hinged to the squab (C) bent towards the front arm (1) of the pair.

9. A seat according to any one of the preceding claims, characterised in that the locking device (9) is of the Porter type.

## Patentansprüche

1. Fahrzeugsitz, umfassend ein von wenigstens einem Paar verschwenkbarer Trägerarme (1, 2), einem vorderen Arm (1) bzw. einem hinterem Arm (2), getragenes Sitzteil (C), wobei die Stellung des Sitzteils (C) durch das Verschwenken der Arme (1, 2) wahlweise einstellbar ist, ein Trägerelement (3), an welchem die Arme (1, 2) des Paars in einer Stellung unterhalb (1b, 2b) des Sitzteils angelenkt sind, wodurch das Sitzteil (C) in eine bestimmte, ausgewählte Einstell-Stellung durch das Verschwenken der Arme (1, 2) bewegbar ist,
dadurch gekennzeichnet,
daß dem wenigstens einem Paar Arme (1, 2) ferner zugeordnet ist;
- eine Verriegelungseinrichtung (9), welche eine mit zwei entgegengesetzten Enden an einem Arm (1) des Paars bzw. an dem anderen Arm (2) in der Nähe des Sitzteils (C) angelenkte Stange (8) und einen Körper (10) umfaßt, welcher mit der Stange (8) in einem Eingriffszustand und einem Freigabezustand zusammenwirken kann, in welchen eine Relativbewegung der Stange (8) und des Körpers (10) verhindert bzw. ermöglicht ist; wobei der Körper (10) an dem Trägerelement (3) derart angebracht ist, daß seine Bewegung in einer Vorwärts-Rückwärtsrichtung im wesentlichen verhindert ist, wobei die Anordnung derart ist, daß dann, wenn die Verriegelungseinrichtung (9) in ihrem Freigabezustand ist, das Verschwenken der Arme (1, 2) ermöglicht ist, und daß die durch das Verschwenken der Arme (1, 2) erreichte Einstell-Stellung durch die Rückkehr der Verriegelungseinrichtung (9) in den Eingriffszustand beibehaltbar ist.

2. Fahrzeugsitz nach Anspruch 1, dadurch gekennzeichnet, daß er ein Paar verschwenkbarer Trägerarme (1, 2), das Trägerelement (3) und eine Verriegelungseinrichtung (9) an jeder Seite des Sitzes umfaßt.

3. Fahrzeugsitz nach Anspruch 1 oder Anspruch 2, dadurch gekennzeichnet, daß das Trägerelement (3) von einem geformten Rohrkörper gebildet ist.

4. Sitz nach Anspruch 1 oder Anspruch 3, dadurch gekennzeichnet, daß das Trägerelement (3) an seinem hinteren Ende eine Rolle (5) für das rollbare Tragen des Sitzteils (C) trägt.

5. Sitz nach einem der vorhergehenden Ansprüche, dadurch gekennzeichnet, daß dem Trägerelement (3) im wesentlichen vertikale Führungsmittel (14) zugeordnet sind, welche mit dem Körper (10) der Verriegelungseinrichtung (9) derart zusammenwirken, daß sich die Verriegelungseinrichtung (9) relativ zum Trägerelement (3) in einer im wesentlichen vertikalen Richtung eine bestimmte Strecke bewegen kann.

6. Sitz nach einem der vorhergehenden Ansprüche, dadurch gekennzeichnet, daß er elastische Mittel (6) umfaßt, welche auf wenigstens einen (1) der Arme des Paars (1, 2) derart einwirken, daß bewirkt wird, daß die Arme (1, 2) in der dem Anheben des Sitzpolsters (C) entsprechenden Richtung verschwenkt werden.

7. Sitz nach Anspruch 1 oder Anspruch 6, dadurch gekennzeichnet, daß wenigstens einer (1) der Arme des Paars (1, 2) einen unteren Abschnitt aufweist, welcher unter dem Trägerelement (3) auskragend angeordnet ist, und daß elastische Vorspannmittel (6) zwischen-dem Trägerelement (3, 7) und dem unteren vorstehenden Abschnitt des wenigstens einen Arms (1) wirken.

8. Sitz nach einem der vorhergehenden Ansprüche, dadurch gekennzeichnet, daß der hintere Arm (2) des Paars (1, 2) im allgemeinen L-förmig ist, wobei ein zum Anlenken an dem Sitzteil (C) bestimmtes oberes Ende (2a) zum vorderen Arm (1) hin gebogen ist.

9. Sitz nach einem der vorhergehenden Ansprüche, dadurch gekennzeichnet, daß die Verriegelungseinrichtung (9) vom Porter-Typ ist.

## Revendications

1. Siège de véhicule comprenant une assise (C) supportée par au moins une paire de bras supports pivotants (1, 2), un bras avant (1) et un bras arrière (2) respectivement, la position de l'assise (C) pouvant être réglée sélectivement par le mouvement des bras (1, 2), un élément support (3) auquel les bras (1, 2) de la paire sont articulés dans une position située au-dessous (1b, 2b) de l'assise, de sorte que l'assise (C) peut être placée dans une position de réglage particulière choisie, par le pivotement des bras (1, 2),
caractérisé en ce qu'au moins une paire de bras (1, 2) est en outre associée à :
- un dispositif de verrouillage (9) comprenant une tige (8) ayant deux extrémités opposées qui sont respectivement articulées sur un bras (1) de la paire et sur l'autre bras (2) à proximité de l'assise (C), et un corps (10) qui peut coopérer avec la tige (8) dans un état verrouillé et dans un état déverrouillé, dans lesquels le déplacement relatif de la tige (8) et du corps (10) est respectivement interdit ou autorisé, le corps (10) étant monté sur l'élément support (3) de manière à être sensiblement empêché de se déplacer dans la direction avant-arrière, l'agencement étant tel que, lorsque le dispositif de verrouillage (9) est dans son état déverrouillé, ledit pivotement des bras (1, 2) est autorisé, et la position de réglage atteinte par ce pivotement des bras (1, 2) peut être maintenue par le retour du dispositif de verrouillage (9) à l'état verrouillé.

2. Siège de véhicule selon la revendication 1, caractérisé en ce qu'il comprend deux bras supports pivotants (1, 2), un élément support (3) et un dispositif de verrouillage (9) sur chaque côté du siège.

3. Siège de véhicule selon la revendication 1 ou la revendication 2, caractérisé en ce que l'élément support (3) est constitué par un corps tubulaire profilé.

4. Siège selon la revendication 1 ou la revendication 3, caractérisé en ce qu'à son extrémité arrière, l'élément support (3) porte un galet (5) pour donner un appui roulant à l'assise (C).

5. Siège selon une quelconque des revendications précédentes, caractérisé en ce que des moyens de guidage (14) sensiblement verticaux sont associés à l'élément support (3) et coopèrent avec le corps (10) du dispositif de verrouillage (9) de manière à permettre au dispositif de verrouillage (9) de se déplacer d'une certaine distance dans une direction sensiblement verticale par rapport à l'élément support (3).

6. Siège selon une quelconque des revendications précédentes, caractérisé en ce qu'il comprend des moyens élastiques (6) qui agissent sur au moins un (1) des bras de la paire (1, 2) de manière à faire pivoter les bras (1, 2) dans le sens qui correspond à l'élévation de l'assise (C).

7. Siège selon la revendication 1 ou la revendication 6, caractérisé en ce qu'au moins un (1) des bras de la paire (1, 2) a une portion inférieure qui est en porte-à-faux au-dessous de l'élément support (3) et en ce que des moyens de sollicitation élastique (6) agissent entre l'élément support (3, 7) et la portion inférieure débordante d'au moins un bras (1).

8. Siège selon une quelconque des revendications précédentes, caractérisé en ce que le bras arrière (2) de la paire (1, 2) est en forme générale de L, avec une extrémité supérieure (2a) destinée à être articulée sur l'assise (C) coudée vers le bras (1) de la paire.

9. Siège selon une quelconque des revendications précédentes, caractérisé en ce que le dispositif de verrouillage (9) est du type Porter.
